Europäisches Patentamt

European Patent Office

Office européen des brevets

(11) Veröffentlichungsnummer: **0 202 584 B1**

# (12) EUROPÄISCHE PATENTSCHRIFT

(45) Veröffentlichungstag der Patentschrift: **11.03.92**

(21) Anmeldenummer: **86106506.8**

(22) Anmeldetag: **13.05.86**

(51) Int. Cl.⁵: **B60V 3/06**, B63B 1/12

(54) **Katamaran-Wasserfahrzeug.**

(30) Priorität: **17.05.85 DE 3517862**

(43) Veröffentlichungstag der Anmeldung:
**26.11.86 Patentblatt 86/48**

(45) Bekanntmachung des Hinweises auf die
Patenterteilung:
**11.03.92 Patentblatt 92/11**

(84) Benannte Vertragsstaaten:
**FR GB NL SE**

(56) Entgegenhaltungen:
**GB-A- 602 472**
**GB-A- 2 135 248**
**US-A- 3 835 802**
**US-A- 4 043 285**
**US-A- 4 069 634**

(73) Patentinhaber: **BLOHM + VOSS AG**
**Hermann-Blohm-Strasse 3**
**W-2000 Hamburg 11(DE)**

(72) Erfinder: **Schlichthorst, Norbert, Dipl.-Ing.**
**Osterberg 7**
**W-2150 Beckdorf(DE)**

(74) Vertreter: **Dipl.-Phys.Dr. Manitz Dipl.-Ing.,**
**Dipl.-W.-Ing. Finsterwald Dipl.-Ing. Grämkow**
**Dipl.-Chem.Dr. Heyn Dipl.-Phys. Rotermund**
**Morgan, B.Sc.(Phys.) Robert-Koch-Strasse 1**
**W-8000 München 22(DE)**

## Beschreibung

Die Erfindung betrifft ein Katamaran-Wasserfahrzeug mit zwei sich in Fahrtrichtung erstreckenden, parallel zueinander mit Abstand angeordneten Schwimmern, welche oben durch eine Einbauten tragende, unten durch ein luftdichtes Querdeck abgedichtete Verbindungsstruktur miteinander verbunden sind. Grundsätzlich läßt sich die Erfindung auch bei Mehrrumpf-Wasserfahrzeugen mit mehr als zwei Schwimmern anwenden.

Insbesondere betrifft die Erfindung ein Katamaran-Luftkissenwasserfahrzeug mit zwei sich in Fahrtrichtung erstreckenden, parallel zueinander mit Abstand angeordneten Schwimmern, deren Querschnitt sich von unten nach oben erweitert und welche oben durch eine Decksstruktur miteinander verbunden sind, mit vorn und achtern zwischen den Schwimmern angeordneten elastischen Schürzen, die sich bis mindestens annähernd zur Wasseroberfläche erstrecken und mit den Schwimmern einen Luftraum zwischen dem Boden der Decksstruktur und der Wasseroberfläche eingrenzen, mit Hauptantriebsaggregaten, welche im achterlichen Bereich der Schwimmer angeordnete Schubmittel antreiben, und mit Ventilatoren, die zum Anheben des Wasserfahrzeuges aus der Verdrängerfahrt in die Luftkissenfahrt von außen angesaugte Luft in den eingegrenzten Luftraum unterhalb des Bodens der Decksstruktur blasen.

Derartige Wasserfahrzeuge eignen sich besonders deswegen optimal für den Luftkissenbetrieb, weil die bei Luftkissenfahrt noch etwas eingetauchten Schwimmer bzw. Katamaranrümpfe eine einwandfreie und dichte seitliche Begrenzung des Luftraums des Luftkissens darstellen, so daß lediglich noch vorn und achtern zusätzlich zwischen den Schwimmern elastische Schürzen angeordnet werden müssen, die den betreffenden Luftraum nach vorn und achtern begrenzen.

Nachteilig bei derartigen bekannten Katamaran-Luftkissenwasserfahrzeugen (Naval Engineers Journal, Mai 1984, Seiten 77 bis 93) ist, daß sie in erster Linie für einen optimalen Luftkissenbetrieb ausgelegt sind, während die Verdrängerfahrt nur einen z.B. bei Hafenmanövern, beim Ausfall des Luftkissenantriebs oder bei schwerem Seegang eingenommenen, letztlich unerwünschten Fahrzustand darstellt, der nur deswegen vorgesehen ist, weil er in den angegebenen Situationen nicht vermieden werden kann.

Bei einem bekannten Katamaran-Luftkissenwasserfahrzeug weisen die Schwimmer zumindest entlang eines wesentlichen Bruchteils ihrer Gesamtlänge im wesentlichen oberhalb ihres bei Verdrängerfahrt eingetauchten Verdrängungs-Schwimmerbereiches einen deutlich, insbesondere sprungartig verbreiterten Aufnahmeaufsatz auf, der insbesondere zur Aufnahme der Hauptantriebsaggregate dient und in dessen oberem Endbereich die Decksstruktur angesetzt ist. Hierdurch wird erreicht, daß die Verdrängerfahrt einen neben der Luftkissenfahrt völlig gleichberechtigten Fahrzustand darstellt, in dem sowohl von der Wirtschaftlichkeit her als auch von der Stabilität und dem Fahrkomfort her gesehen optimale Verhältnisse vorliegen. Ein optimales Fahrverhalten eines Katamaran-Luftkissenwasserfahrzeuges auch in Verdrängerfahrt ist besonders dann von großer Bedeutung, wenn dieses Wasserfahrzeug als Kampfschiff verwendet wird, denn durch das Absenken aus der Luftkissenfahrt in die Verdrängerfahrt wird das Wasserfahrzeug aus der Ferne schwerer ortbar.

Die vorliegende Erfindung will nun ein Katamaran-Wasserfahrzeug schaffen, das eine besonders stabile, gegen alle im Seegang auftretenden Kräfte, insbesondere Biege- und Verwindungskräfte steife Verbindungsstruktur aufweist, die außer ihrer Funktion als stabilisierender Grundkörper für das gesamte Wasserfahrzeug auch noch alle wichtigen Einbauten des Wasserfahrzeuges auf einfache aber gleichwohl sichere Weise zu tragen gestattet, welche nicht innerhalb der insbesondere oben besonders breit ausgebildeten Schwimmer untergebracht werden. Das erfindungsgemäße Wasserfahrzeug soll äußerst wirtschaftlich herstellbar, betreibbar und umrüstbar bzw. reparierbar sein, mit kleiner Besatzung auskommen, eine gute Seefähigkeit aufweisen und auch relativ lange auf See verweilen können. Die Reichweite soll zumindest mittleren Anforderungen entsprechen. Es soll ein weites Geschwindigkeitsspektrum mit großer Verdrängungsvariation gewährleistet sein. Die Tiefgänge des Wasserfahrzeuges sollen mittel bis gering sein. Insbesondere ist die Erfindung für Katamaran-Wasserfahrzeuge bis zu einer Verdrängung von etwa 600 t bestimmt.

Zur Lösung dieser Aufgabe sieht die Erfindung vor, daß die Verbindungsstruktur mindestens zwei im Abstand hintereinander angeordnete Doppel-Querfachwerkträger umfaßt, welche zumindest teilweise Querganghohlräume und Leitungsaufnahmehohlräume enthalten und an deren Front- und/oder Achterseiten Container und in Verbindung mit den Querganghohlräumen bzw. Leitungsaufnahmehohlräumen horizontale Verkehrswege darstellende Längsgang- und -versorgungselemente in modularer Bauweise angebracht sind.

Der Erfindungsgedanke ist also darin zu sehen, daß die beiden Schwimmer nicht etwa durch komplette Decksstrukturen stabil miteinander verbunden sind, sondern durch ganz spezielle Doppel-Querfachwerkträger, welche jedoch außer der alle an und zwischen den Schwimmern auftretenden Kräften aufnehmenden Funktion auch noch Querganghohlräume aufweisen und eine weitere Funktion dadurch übernehmen, daß sie die zwischen ihnen aufgehängten Container und Längsgang- und -versorgungselemente tragen. Unter einem Doppel-Querfachwerkträger im Sinne der Erfindung ist dabei ein Fachwerkträger zu verstehen, der aus zwei in einem geringen Abstand in Schiffslängsrichtung angeordneten und fest miteinander verbundenen Einfach-Querfachwerkträgern besteht, wobei die Breite und die Höhe der Doppel-Querfachwerkträger so ist, daß im Innern ein der Größe durchschnittlicher Personen entsprechender Quergang angeordnet werden kann. Durch diese Doppelausbildung wird einerseits eine hervorragende Stabilität des Wasserfahrzeuges gegen Biege- und Verkantungskräfte erzielt und andererseits ein in Querrichtung verlaufender Hohlraum geschaffen, in dem nicht nur die für Personen begehbaren Gänge, sondern auch Hohlräume für das Verlegen von Leitungen untergebracht werden können, die zwischen den beiden Schwimmern verlegt werden müssen oder auch von den Schwimmern oder Containern zur Brücke oder zu anderen Aggregaten innerhalb des Wasserfahrzeuges führen.

Wegen der hohen Biege- und Verwindungssteifigkeit der Doppel-Querfachwerkträger, ist es nach einer besonders bevorzugten Ausführungsform ausreichend, wenn die Verbindungsstruktur zwischen zumindest einigen der Doppel-Querfachwerkträger angeordnete Einfach-Querfachwerkträger umfaßt. Da die Einfach-Querfachwerkträger leichter und weniger aufwendig in der Herstellung sind, kann auf diese Weise ein sehr stabiler Schiffskörper mit herabgesetztem Gewichts- und Kostenaufwand erstellt werden.

Besonders vorteilhaft ist es, wenn in Längsrichtung abwechselnd ein Doppel-Querfachwerkträger und ein Einfach-Querfachwerkträger zwischen den Schwimmern angebracht ist.

Zur wirtschaftlichen Herstellung erfindungsgemäßer Luftkissenwasserfahrzeuge ist es zweckmäßig, wenn die Längsabstände zwischen aufeinanderfolgenden Querfachwerkträgern gleich sind. Auf diese Weise können Einheitscontainer an beliebigen Stellen zwischen den Querfachwerkträgern angeordnet und gegebenenfalls auch ausgewechselt werden. Dieses Ausführungsbeispiel gestattet also eine besonders wirtschaftliche Herstellung von Serien-Schiffen in modularer Bauweise.

Bevorzugt ist die Ausbildung so, daß die Container und die Längsgang- und -versorgungselemente an der Front- und Achterseite an je einem Querfachwerkträger angebracht sind. Alle Container und Längsgang- und -versorgungselemente werden also erfindungsgemäße nur an zwei Seiten an der Verbindungsstruktur aufgehängt, was einer wirtschaftlichen Montage und Demontage dienlich ist und den Aufwand für die Befestigung dieser Bauteile erheblich reduziert.

Einer wirtschaftlichen Montage und Demontage dient eine weitere Ausführungsform, die sich dadurch kennzeichnet, daß die Container und die Längsgang- und -versorgungselemente von zumindest einer Seite her in Querrichtung an ihren Ort zwischen zwei Querfachwerkträgern einbringbar sind. Auf diese Weise kann zunächst im Rohbau der aus Schwimmern und Querfachwerkträgern bestehende Schiffskörper komplett fertiggestellt werden, während die Container und Gangelemente parallel in anderen Fertigungsstätten gefertigt werden.

Nach Fertigstellung des Schiffs-Grundkörpers können dann nach der vorliegenden bevorzugten Ausführungsform alle Einbauten innerhalb kürzester Zeit in den Schiffsgrundkörper eingebracht und montiert werden.

Für eine gute Biege- und Verbindungssteifigkeit ist es zweckmäßig, wenn jeder Querfachwerkträger einen Obergurt, einen Untergurt und dazwischen angeordnete Verstrebungen aufweist.

Um die erforderlichen Durchgänge in Längsrichtung des Schiffes zu schaffen und gleichzeitig eine gute Stabilität zu gewährleisten, soll nach einer bevorzugten Weiterbildung der Erfindung jeder Querfachwerkträger Verstrebungsabschnitte und Durchgangsabschnitte aufweisen.

Um die gesamte Höhe zwischen den Ober- und Untergurten für die Anordnung von begehbaren Kanälen ausnutzen zu können, sind zweckmäßig in den Ober- und/oder Untergurten Leitungsdurchführungskanäle vorgesehen, so daß die Leitungen außerhalb des Zwischenraumes zwischen Ober- und Untergurten verlegt werden können.

Wie bereits erwähnt wurde, sind zweckmäßigerweise die Doppel-Querfachwerkträgeraus zwei einen Abschnitt in Schiffslängsrichtung aufweisenden Einfach-Querfachwerkträgern zusammengesetzt. Vorzugsweise sind dabei die Einfach-Querfachwerkträger identisch mit denjenigen Einfach-Querfachwerkträgern, die zwischen je zwei Doppel-Querfachwerkträgern angeordnet sind. Dies ermöglicht eine wirtschaftliche Herstellung sowohl der Einfach- als auch der Doppel-Querfachwerkträger.

Zur Verwirklichung verwindungssteifer, gleichwohl aber begehbarer Doppel-Querfachwerkträger sind nach einer besonders bevorzugten Ausführungsform zwischen den Einfach-Querfachwerkträgern, die gemeinsam den Doppel-Querfachwerkträger bilden, oben und unten in Querabständen Längsverbinder vorgesehen.

Weiter sieht die Erfindung zur Schaffung eines besonders verwindungssteifen Schiffsgrundkörpers vor, daß aufeinanderfolgende Querfachwerkträger durch Längsträger fest verbunden sind. Die Längsträger sind dabei zweckmäßigerweise jeweils nur oben und unten angeordnet, derart, daß von der Seite her die Container und Längsgang- und -versorgungselemente dazwischen einbringbar sind.

Auf diese Weise können auch die Längsträger bereits vor dem Einbringen der Einbauten fest montiert werden. Ein allen Seegangsbeanspruchungen widerstehender stabiler Schiffsgrundkörper wird so schon verwirklicht, bevor irgendwelche Gangelemente oder Container eingebracht worden sind.

Um die Stabilität des Grundkörpers zu verbessern, sind nach einer weiteren Ausführungsform zwischen den seitlichen oberen und unteren Längsträgern herausnehmbare Vertikalstützen angeordnet. Durch die Herausnehmbarkeit der Vertikalstützen wird eine Montage und Demontage der Gangelemente und Container von der Seite her ermöglicht.

Bei einem Luftkissen-Wasserfahrzeug ist das unterste, lediglich der Abdichtung dienende Deck auch luft- und gasdicht ausgebildet.

Wenn auch in das erfindungsgemäße Wasserfahrzeug grundsätzlich Zwischendecks und Längs- oder Querwände eingebaut werden könnten, ist es doch bevorzugt, daß in der Verbindungsstruktur ein nur der Abdichtung, dienendes unterstes Querdeck vorgesehen ist und ansonsten nur an vorgebbaren Stellen zwischen den Containern und den Längsgang- und -versorgungselementen Zwischenböden angeordnet sind und/oder daß in der Verbindungsstruktur nur an vorgebbaren Stellen zwischen den Containern und den Längsgang- und -versorgungselementen Zwischenwände angeordnet sind.

Der Grundkörper stellt also praktisch ein in jeder Weise stabiles Grundgerippe dar, in welches die Container, Gang- und Rohrleitungselemente vorzugsweise schwingungs- bzw. stoßgedämpft eingehängt sind.

Bevorzugt ist die Verbindungsstruktur seitlich, vorn und achtern durch Paneele wasserdicht abgedichtet. Das erwähnte Grundgerippe ist also im Innern in Quer-, Längs- und Höhenrichtung durchlässig und lediglich an den äußeren Oberflächen durch die Paneele sowie unten und oben durch Querdecks abgedichtet.

Eine vorteilhafte Weiterbildung dieser Ausführungsform kennzeichnet sich dadurch, daß die seitlichen Paneele so unterteilt sind, daß sie zum seitlichen Einbringen oder Herausnehmen der Container und der Längsgang- und -versorgungselemente sektionsweise abnehmbar sind.

Bevorzugt ist das erfindungsgemäße Katamaran-Wasserfahrzeug so ausgebildet, daß die Schwimmer im oberen Bereich einen nach innen gerichteten Vorsprung aufweisen, an dem sich lediglich ganz oben die Querfachwerkträger und das unterste Querdeck abstützen.

Hierbei soll insbesondere vorgesehen sein, daß der Vorsprung maximal etwa genauso breit wie oder etwas weniger breit als die breiteste Stelle des darunter liegenden Teils des Schwimmers ist.

Diese Ausführung ist deswegen von besonderer Bedeutung, weil hier für die Verbindung der Querfachträger mit insbesondere den Querschotten der Schwimmer bzw. Rümpfe eine relativ große Breite zur Verfügung steht, was der Stabilität des gesamten Schiffskörpers dienlich ist. Insbesondere ist der von den Querfachwerkträgern noch überspannte freie Raum zwischen den Schwimmern durch diese Ausbildung erheblich reduziert.

Eine zur Erzielung einer besonders guten Verbindung und Stabilität bevorzugte Dimensionierung kennzeichnet sich dadurch, daß der Vorsprung maximal etwa genauso breit wie oder etwas weniger breit als die breiteste Stelle des darunter liegenden Teils des Schwimmers ist.

Um einen möglichst großen Teil der zwischen den Schwimmern auftretenden Kräfte im Bereich oberhalb der Schwimmer auffangen zu können, sind nach einer bevorzugten Weiterbildung der Erfindung seitlich zumindestens ein Vertrebungsabschnitt und ein Längsdurchgangsabschnitt vertikal oberhalb des zugeordneten Schwimmers vorgesehen.

Ein besonders günstiges Verhältnis zwischen der Breite der Auflagefläche auf den Schwimmern und dem Raum zwischen den Schwimmern besteht dann, wenn 40 bis 55 %, insbesondere 45 bis 50 % der Länge jedes Querfachwerkträgers im Bereich oberhalb des Zwischenraumes zwischen den Schwimmern, der Rest vertikal oberhalb der Schwimmer angeordnet ist.

Falls das erfindungsgemäße Wasserfahrzeug einen höheren Aufbau erhalten soll, können nach einer besonders bevorzugten Ausführungsform auf den Querfachwerkträgern gleichartig ausgebildete, jedoch kürzere Ober-Doppel- bzw. -Einfach-Querfachwerkträger angebracht sein. Hierbei sieht die Erfindung zweckmäßigerweise vor, daß die kürzeren Ober-Doppel- und Einfach-Querfachwerkträger noch so lang sind, daß sie bis in den Bereich vertikal oberhalb der Schwimmer reichen. Die oberen Querfachträger werden somit mit ihren Endbereichen über die darunter liegenden Querfachträger vertikal auf den Schwimmern abgestützt, was einer die einzelnen Bauteile und Schweißverbindungen nicht zu stark belastenden Kraftübertragung dient.

Zum einfachen Einbringen der Container und sonstigen Elemente von der Seite her, sind nach einer weiteren Ausführungsform an der Front- und/oder Achterseite der Querfachwerkträger Querlaufschienen zum Ein- bzw. Ausfahren und gegebenenfalls Befestigen der Container und/oder der Längsgang- und -versorgungselemente vorgesehen.

Im Zusammenhang mit dieser Ausführungsform sollen die Container und/oder die Längsgang- und -versorgungselemente mit heb- und senkbaren Laufrollen für die zugeordnete Querlaufschiene versehen sein.

Wenn auch grundsätzlich in den Doppel-Querfachträgern zwecks Begehbarkeit einfach Laufstege installiert sein könnten,so ist es doch bevorzugt, wenn die Doppel-Querfachwerkträger Quergangkanäle enthalten, die vorzugsweise rundum geschlossen sind. Mit anderen Worten werden in die Doppel-Querfachwerkträger allseits geschlossene rohrartige, begehbare Quergangkanäle eingebaut.

Um an den gewünschten Stellen einwandfreie Übergänge zwischen Quer- und Längsgängen zu erhalten, sind nach einer bevorzugten Weiterbildung der Erfindung im Bereich der Längsdurchgangsabschnitte Längsgangkanalanschlüsse an den Quergangkanälen angeordnet.

Hierbei sind zweckmäßigerweise an die Längsgangkanalanschlüsse Längsgangkanäle angeschlossen.

Um von den einzelnen Gängen auch Zugang zu begehbaren Containern zu erhalten, sollen nach einer bevorzugten Weiterbildung der Erfindung von den Quergangkanälen und/oder den Längsgangkanälen Durchgänge zu angrenzenden Containern abzweigen.

Zweckmäßig sind dabei die Container-Durchgänge als Kanalstücke ausgebildet. Insbesondere sollen diese Zwischenstücke elastisch ausgebildet oder angeordnet sein, um die erforderlichen Bewegungsspielräume zu gewährleisten.

Während die horizontalen Verkehrswege in oder zwischen den Querfachwerkträgern ausgebildet werden, sind nach einer bevorzugten Weiterbildung der Erfindung vertikale Verkehrswege zwischen übereinander angeordneten Containern vorgesehen, welche zu diesem Zweck vorzugsweise oben bzw. unten entsprechende Öffnungen aufweisen, durch die z.B. Leitern oder Treppen hindurchgeführt sein können.

Von besonderer Bedeutung im Zusammenhang mit der vorliegenden Erfindung ist es, wenn die Container, die Quergangkanäle und die Längsgangkanäle elastisch an den Querfachwerkträgern aufgehängt sind. Die erfindungsgemäße Konstruktion eines Wasserfahrzeuges eignet sich für eine derartige elastische Aufhängung besonders, weil ohnehin alle von Personen begehbaren oder von stoßempfindlichen Geräten und Anlagen eingenommenen Räumlichkeiten an der starren Grundstruktur aufgehängt werden müssen. Zwecks elastischer Aufhängung brauchen hierbei nur Schockdämpfer in die Aufhängeelemente einbezogen zu werden, um die erwünschte Stoßdämpfung durchgehend zu gewährleisten.

Zur Schaffung eines Schiffsaufbaus in modularer Bauweise weisen zweckmäßigerweise die Container und die Längsgang- und -versorgungselemente in Schiffslängsrichtung ein dem Abstand der Querfachwerkträger entsprechendes Einheitsmaß auf. Weiter ist es zweckmäßig, wenn die Container in seitlicher Richtung ein Einheitsmaß oder ein ganzzahliges Vielfaches dieses Einheitsmaßes aufweisen. Hierbei kann insbesondere vorgesehen sein, daß Container mit dem einfachen, zweifachen und dreifachen Einheitsmaß vorgesehen sind.

Die Erfindung wird im folgenden beispielsweise anhand der Zeichnung beschrieben; in dieser zeigt:

Fig. 1 eine schematische, teilweise geschnittene Seitenansicht eines erfindungsgemäßen Katamaran-Luftkissenwasserfahrzeuges,

Fig. 2 eine teilweise geschnittene, schematische Draufsicht des Katamaran-Luftkissenwasserfahrzeuges nach Fig. 1 gemäß Linie II-II in Fig. 1,

Fig. 3 eine teilweise geschnittene, schematische Draufsicht des Katamaran-Luftkissenwasserfahrzeuges gemäß Fig. 1 nach Linie III-III in Fig. 1,

Fig. 4 einen schematischen Querschnitt eines erfindungsgemäßen Katamaran-Luftkissenwasserfahrzeuges,

Fig. 5 eine schematische perspektivische Darstellung eines Doppel-Querfachwerkträgers 217 mit daran im Abstand angeschlossenem Einfach-Querfachwerkträger 218,

Fig. 6 eine Vorderansicht eines erfindungsgemäßen Einfach-Querfachwerkträgers 218 bzw. 231, wobei die Darstellung an der rechten Seite abgebrochen ist,

Fig. 7 einen Schnitt nach Linie VII-VII in Fig. 6,

Fig. 8 eine zweifach unterbrochene bzw. abgebrochene Vorderansicht eines erfindungsgemäßen Doppel-Querfachwerkträgers 217 bzw. 230,

Fig. 9 einen Schnitt nach Linie IX-IX in Fig. 8,

Fig. 10 eine schematische Ausschnittsansicht ähnlich Fig. 9 zur Veranschaulichung der Verfahrbarkeit und Festlegbarkeit der Container 214 an einem Doppel-Querfachwerkträger 217,

Fig. 11 eine Ansicht in Richtung des Pfeiles XI in Fig. 10,

Fig. 12 eine schematische Ansicht in Richtung des Pfeiles XII in Fig. 10,

Fig. 13 eine schematische perspektivische Ansicht eines Quergangkanals 234 mit Längskanalanschlüssen 235,

Fig. 14 eine schematische perspektivische Ansicht analog Fig. 13 einer weiteren vorteilhaften Ausführungsform,

Fig. 15  in vergrößerter Schnittansicht die Einzelheit XV in Fig. 14,

Fig. 16  einen Querschnitt eines einen vertikalen Verkehrsweg enthaltenden Containers 214''' mit seitlich angeschlossenen Längsgangkanälen 236 in teilweise geschnittener Darstellung,

Fig. 17  eine teilweise geschnittene schematische Seitenansicht zweier übereinander angeordneter Doppel-Querfachwerkträger 217, 230 mit daran angehängten, einen vertikalen Verkehrsweg 239 enthaltenden Containern 214''',

Fig. 18  eine schematische perspektivische Ansicht eines bevorzugten Längsgangkanals und

Fig. 19  eine perspektivische Ansicht einer weiteren Ausführungsform eines Längsgangkanals, wie er zwischen zwei in Längsrichtung aufeinanderfolgenden Querfachwerkträgern angeordnet werden kann.

In der folgenden Beschreibung bezeichnen gleiche Bezugszahlen stets gleiche bzw. einander entsprechende Bauteile.

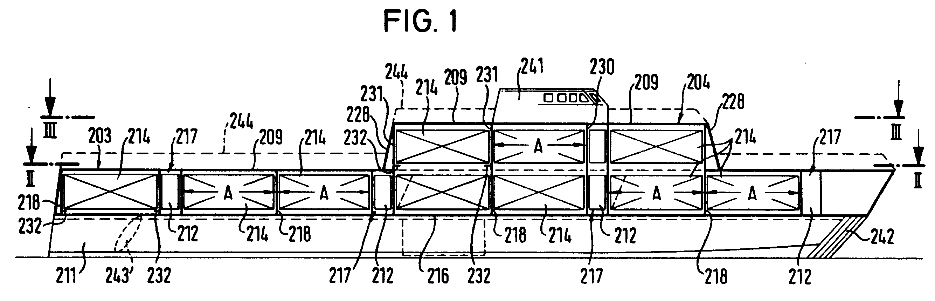

Nach den Fig. 1 bis 4 weist ein erfindungsgemäßes Katamaran-Luftkissenwasserfahrzeug zwei zueinander parallele Schwimmer bzw. Rümpfe 211 auf, welche mit vorderen und achterlichen sich zwischen ihnen erstreckenden Luftabdichtungsschürzen 242, 243 sowie einem unteren Querdeck 216 einen Luftkissenraum 210 oberhalb der tiefliegenden Luftkissen-Schwimmwasserlinie 207 bzw. der Verdrängerfahrt-Schwimmwasserlinie 208 oder dazwischenliegender Zwischenschwimmwasserlinien z.B. 206 eingrenzen. Auf ihrer Oberseite sind die Schwimmer 211 zum einen durch Doppel-Querfachwerkträger 217 miteinander verbunden. Auf einigen der Doppel-Querfachwerkträger 217 sind symmetrisch zur Schiffsmittellängsachse 205 weniger lange Ober-Doppel-Querfachwerkträger 230 befestigt. Zum anderen sind die Schwimmer 211 oben durch Einfach-Querfachwerkträger 218 verbunden, auf denen teilweise weniger lange Ober-Einfach-Querfachwerkträger 231 ebenfalls symmetrisch zur Schiffsmittellängsachse 205 befestigt sind.

Zwischen jeweils zwei Doppel-Querfachwerkträgern 217 der unteren Etage 203 (Fig. 1) ist in Schiffslängsrichtung gesehen nach den Fig. 1 bis 5 ein Einfach-Querfachwerkträger 218 angeordnet. In der oberen Etage 204 ist an erster, dritter und vierter Stelle ein Ober-Einfach-Querfachwerkträger 231, an zweiter Stelle ein einziger Ober-Doppel-Querfachwerkträger 230 vorgesehen.

Jeder Doppel-Querfachwerkträger 217, 230 besteht aus zwei in geringem Abstand in Schiffslängsrichtung angeordneten und fest miteinander verbundenen Einfach-Querfachwerkträgern, die baulich genauso aufgebaut sind wie die Einfach-Querfachwerkträger 218, 231.

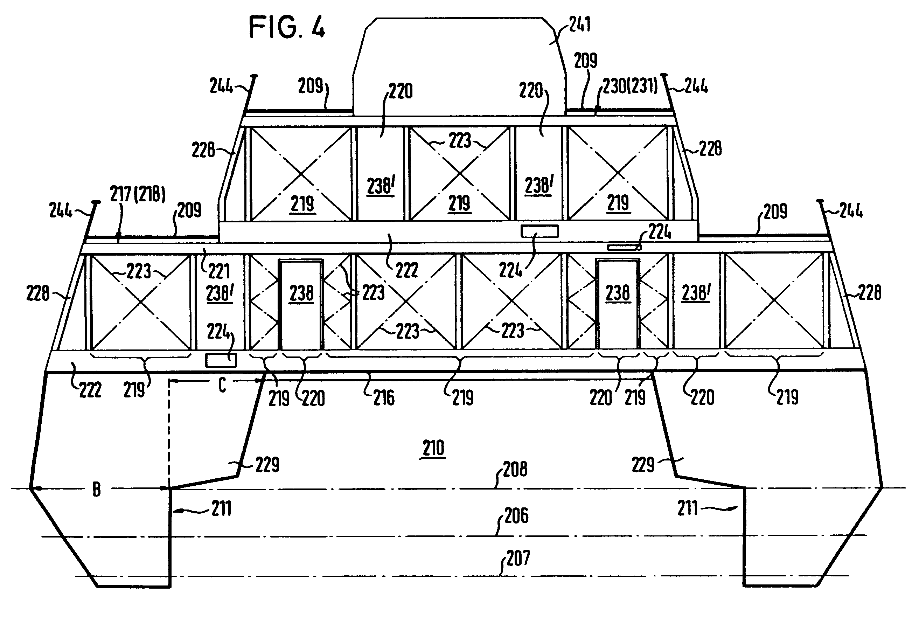

Wie insbesondere aus den Fig. 4 bis 9 hervorgeht, bestehen die Einfach-Querfachwerkträger 218, 231 und die Einzelträger der Doppel-Querfachwerkträger 217, 230 aus Obergurten 221 und Untergurten 222, zwischen denen Verstrebungen 223 angeordnet sind. Die Verstrebungen 223 erstrecken sich jedoch in Breitenrichtung des Schiffes lediglich über Verstrebungsabschnitte 219, zwischen denen Längsdurchgangsabschnitte 220 vorgesehen sind, durch welche hindurch die in Schiffslängsrichtung sich erstreckenden horizontalen Verkehrswege verlegt werden können.

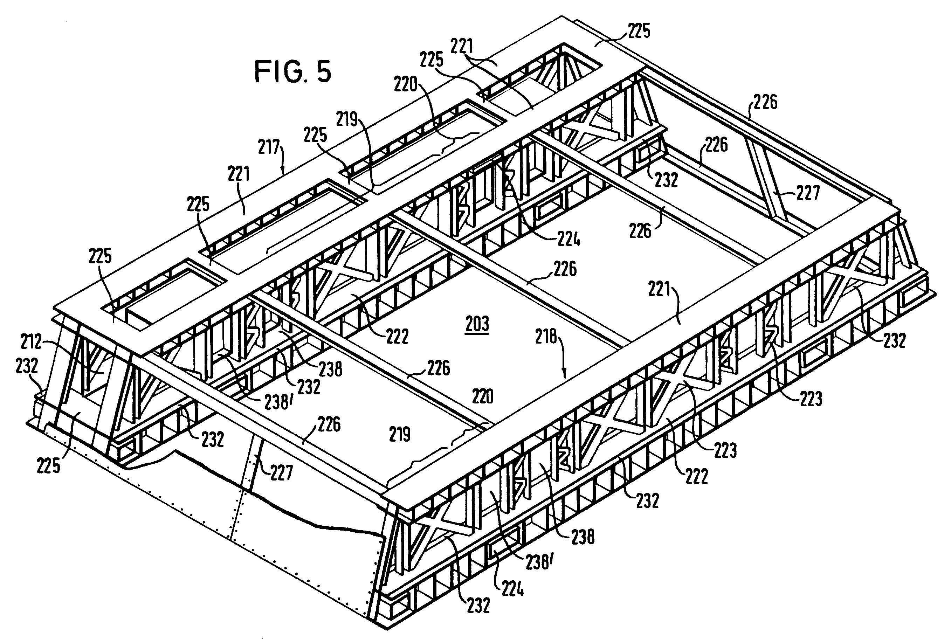

Nach den Fig. 4 und 5 sind in den unteren und oberen Gurten 221, 222 vorzugsweise im Bereich der Längsdurchgangsabschnitte 220 Leitungsdurchführungs-Längskanäle 224 vorgesehen.

Nach den Fig. 4 gibt es sowohl Längsdurchgangsabschnitte 220 mit Türöffnungen 238 zwecks Zuganges zu den noch zu beschreibenden Containern und Durchgangsöffnungen 238', von denen Längsgangkanäle abzweigen, die sich praktisch über die ganze Etagenlänge erstrecken.

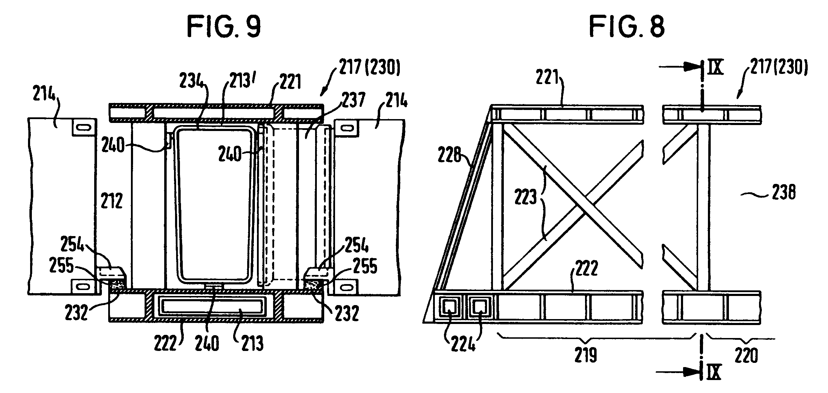

Nach den Fig. 1 bis 8 sind innerhalb jedes Doppel-Querfachwerkträgers 217 bzw. 230 Querganghohlräume 212 belassen, in denen nach Fig. 9 rundum geschlossene Quergangkanäle 234 über elastische Stoßdämpfer 240 aufgehängt sein können, deren Breite und Höhe so bemessen ist, daß dort Personen bequem hindurchgehen können.

Innerhalb, der Doppel-Querfachwerkträger 217, 230 sind nach Fig. 9 unten und oben Leitungsaufnahmehohlräume 213, 213' vorgesehen, wobei zweckmäßigerweise eine Unterteilung in der Weise erfolgt, daß in dem unteren Leitungsaufnahmehohlraum 213 die flüssigkeit- und gasführenden Leitungen verlegt sind, während in dem oberen Leitungsaufnahmehohlraum 213' die elektrischen Leitungen verlegt sind.

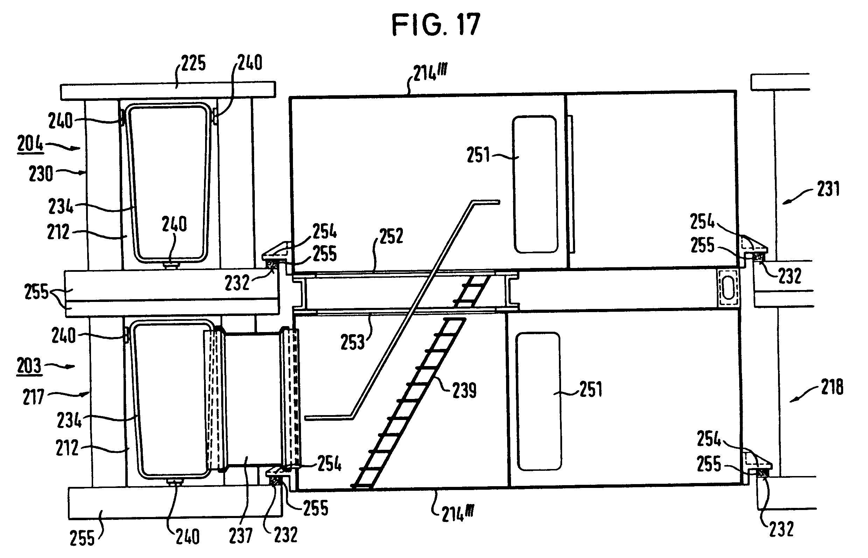

Nach den Fig. 1 bis 3 sind in der unteren Etage 203 jeweils ein Doppel- und ein Einfach-Querfachwerkträger 217, 218 in gleichmäßigen Abständen in Schiffslängsrichtung hintereinander angeordnet, so daß insgesamt vier Querganghohlräume 212 mit darin anzuordnenden Quergangkanälen 234 (Fig. 9, 17) vorhanden sind. In der oberen Etage 204, auf dem der Brückenmodul 241 befestigt ist, befindet sich lediglich ein Ober-Doppel-Querfachwerkträger 230, während die übrigen Querfachwerkträger Ober-Einfach-Querfachwerkträger 231 sind.

Oben ist der im wesentlichen durch die Querfachwerkträger 217, 218, 230, 231 definierte Grundkörper durch Querdecks 209 dort wasserdicht verschlossen bzw. verkleidet, wo oben keine darüber befindliche Etage (z.B. 204 oder 241) anschließt. Rund um die oberen Querdecks 209 erstrecken sich die in Fig. 1 nur gestrichelt angedeuteten Schanzkleider 244.

Nach den Fig. 1 bis 3 sind die Längszwischenräume A zwischen aufeinanderfolgenden Querfachwerkträgern 217, 218 bzw. 230, 231 sämtlich gleich lang, so daß dazwischen entsprechend dimensionierte Einheits-Container 214 angeordnet werden können. Die Höhe eines jeden Containers 214 entspricht im wesentlichen der Höhe der Querfachwerkträger 217, 218, 230, 231.

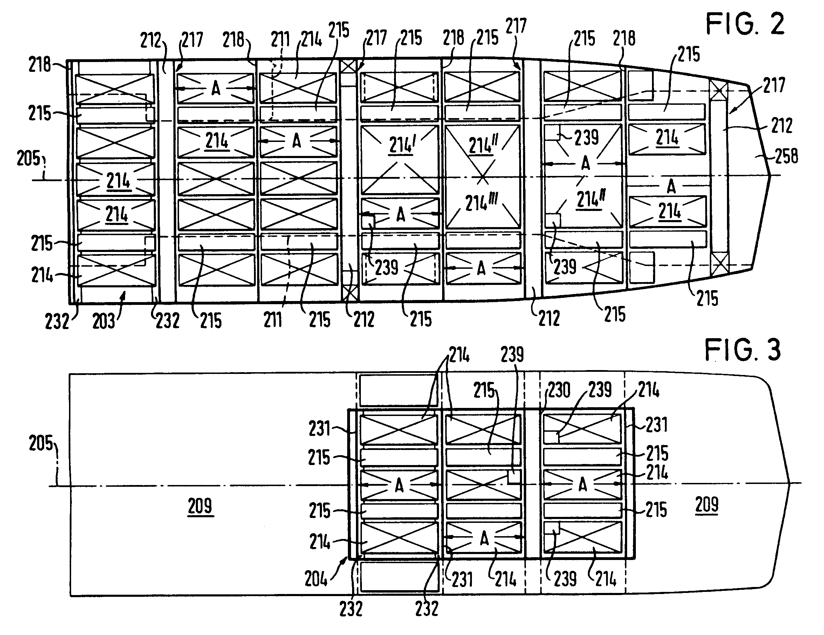

Auch die Breite der Container 214 entspricht nach Fig. 2 einem Einheitsmaß, doch können auch doppelt so breite Container 214' oder dreimal so breite Container 214'' vorgesehen sein.

Nach den Fig. 5 bis 12 sind an den Querfachwerkträgern 217, 218, 230, 231 unten oder auch in nicht dargestellter Weise oben auf der den Containern 214 zugewandten Seite Querlaufschienen 232 angeordnet, auf denen nach den Fig. 1 bis 3, 5, 10 bis 12 unten vorn und achtern an den Containern 214 vorgesehene Laufrollen 233 abrollen können.

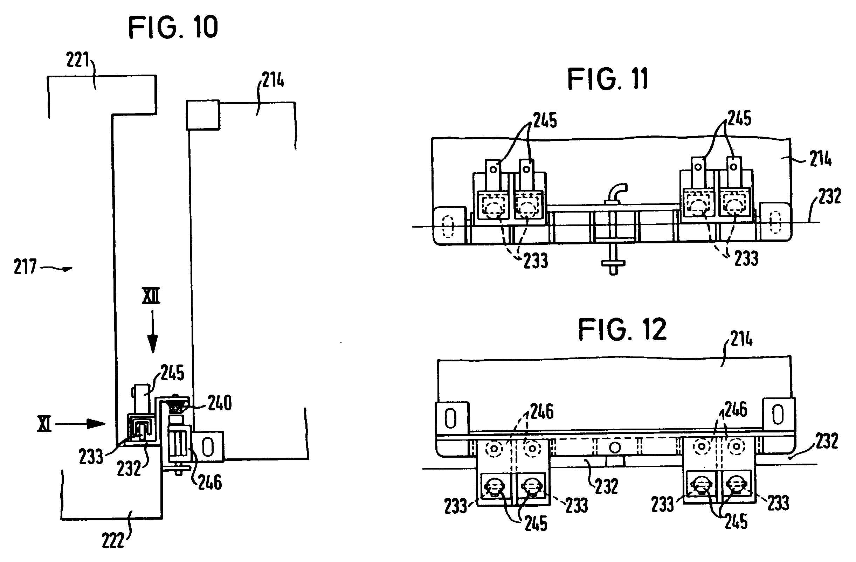

Mittels hydraulisch betätigter Hubvorrichtungen 245 (Fig. 10 bis 12) können die Laufrollen 233 nach unten ausgefahren oder eingezogen werden.

Beim Einziehen der Rollen 233 senken sich die Container 214 nach Fig. 10 bis 12 auf feste Fundamente 246, die auch elastische Zwischenglieder als Schwingungsdämpfer 240' umfassen können.

Nach den Fig. 1 bis 3 und 5 erstrecken sich die Querlaufschienen 232 über die gesamte Länge der Querfachwerkträger 217, 218, 230, 231. In den Fig. 1 bis 3 sind die Querlaufschienen 232 nur an einigen wenigen Stellen schematisch angedeutet.

Nach den Fig. 2 und 3 sind zwischen den Querfachwerkträgern 217, 218, 230, 231 und den Containern 214 auch noch Längsgang- und -versorgungselemente 215 angeordnet, welche in Verbindung mit den Querganghohlräumen 212 die horizontalen Verkehrswege darstellen.

Nach Fig. 4 erstreckt sich unterhalb der Querfachwerkträger 217, 218 zwischen den Schwimmern 211 ein durchgehendes luftdichtes Querdeck 216, welches allein der Abdichtung dient und praktisch keine Trag- und Stabilisierungsfunktionen zu übernehmen hat.

Wie besonders deutlich aus Fig. 5 zu entnehmen ist, sind die beiden Einfach-Querfachwerkträger, die zusammen den Doppel-Querfachwerkträger 217 bzw. 230 bilden, oben und unten durch Längsverbinder 225 zu einer verbindungssteifen Baueinheit miteinander verbunden.

Die im Abstand angeordneten Doppel- und Einfach-Querfachwerkträger 217, 218 bzw. 230, 231 sind in Längsrichtung durch Längsträger 226 verbunden, welche jedoch nur oben und unten vorgesehen sind, damit die Container 214 und die Längsgang- und -versorgungselemente 215 von der Seite her eingebracht werden können.

In der Mitte zwischen den Querfachwerkträgern 217, 218 zur Stabilisierung angeordnete Vertikalstützen 227 sind abnehmbar, um den Zugang der Container zum Innenraum zu gewährleisten.

Das so gebildete Grundgerippe ist außen durch Paneele 228 wasserdicht abgedeckt.

Wie aus Fig. 5 besonders deutlich hervorgeht, befindet sich oberhalb der durch die Querfachwerkträger 217, 218 gebildeten unteren Etage 203 in den Bereichen kein Deck. Dort grenzt die schmaler und kürzer ausgebildete obere Etage 204 an. Ähnlich ist auch zwischen der oberen Etage 204 und dem Brückenmodul 241 (Fig. 1) kein Zwischendeck vorgesehen. Zwischen den einzelnen Trägern 217, 218, 226 sind also Vertikal-Durchgänge vorhanden, die in der später zu beschreibenden Weise für das Schaffen von vertikalen Verkehrswegen genutzt werden können. Im übrigen sind die an die Außenatmosphäre angrenzenden oberen Flächen durch die wasserdichten und begehbaren Querdecks 209 verkleidet.

Nach Fig. 4 weisen die Schwimmer 211 etwa in der oberen Hälfte bzw. im oberen Drittel seitlich nach innen ragende Vorsprünge 229 auf, welche die Auflagebasis für die Querfachwerkträger 217, 218 wesentlich verbreitern und den Raum, der von den Querfachwerkträgern 217, 218 bzw. dem Abdichtungsdeck 216 frei überspannt werden muß, erheblich reduzieren.

Die größte Breite B unterhalb des inneren Vorsprungs 229 ist nach Fig. 4 etwas größer als die Breite der Vorsprünge 229 unmittelbar unterhalb der an die Querschotten der Schwimmer 211 angeschlossenen Querfachwerkträger 217, 218.

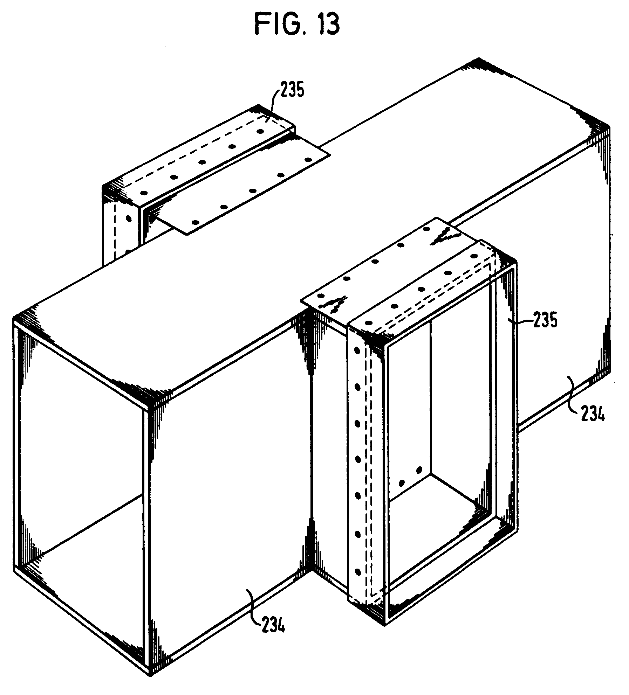

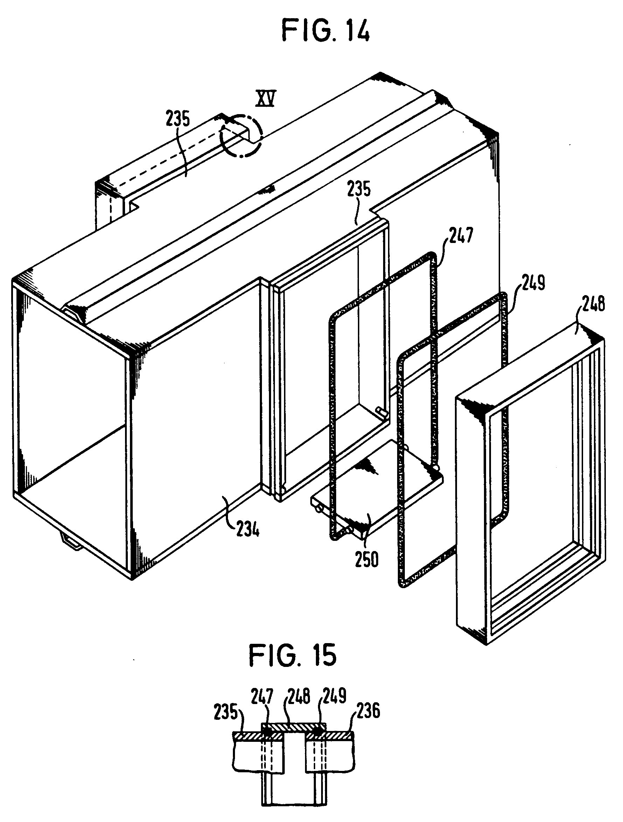

Nach Fig. 13 sind an die kastenförmig ausgebildeten Quergangkanäle 234, die innerhalb der Doppel-Querfachwerkträger 217, 230 federnd angeordnet sind, an den Stellen, wo Längsgang- und -versorgungselemente 215 abzweigen mit Längsgangkanalanschlüssen 235 versehen. Während Fig. 13 einen starren Längsgangkanalanschluß 235 zeigt, ist in den Fig. 14, 15 eine Möglichkeit gezeigt, wie eine in gewissem Rahmen, z.B. um einige Zentimeter bewegliche Anbringung der Längsgang- und -versorgungselemente 215 möglich ist. Hierzu wird um den eigentlichen Längskanalanschluß 235 ein Rundgummi 247 herumgelegt, auf den von der Längsgangseite her ein Verbindungsrahmen 248 aufgeschoben ist.

Der in Schiffslängsrichtung anschließende Längsgangkanal 236 (Fig. 14, 18, 19) ist ebenfalls an seinem dem Quergangkanal 234 zugewandten Ende von einem Rundgummi 249 umgeben, auf den der Verbindungsrahmen 248 ebenfalls aufgeschoben ist. Am Boden ist zwischen dem Längsgangkanalanschluß 235 und dem Längsgangkanal 236 ein bewegliches Übergangsstück 250 vorgesehen. Je nach der Ausbildung der Stärke der Rundgummis 247, 249 und des Spaltes zwischen dem Verbindungsrahmen 248 und dem Längsgangkanalanschluß 235 bzw. dem Längsgangkanal 236 können so relative Bewegungsausgleiche bis zu 7 cm vorgenommen werden.

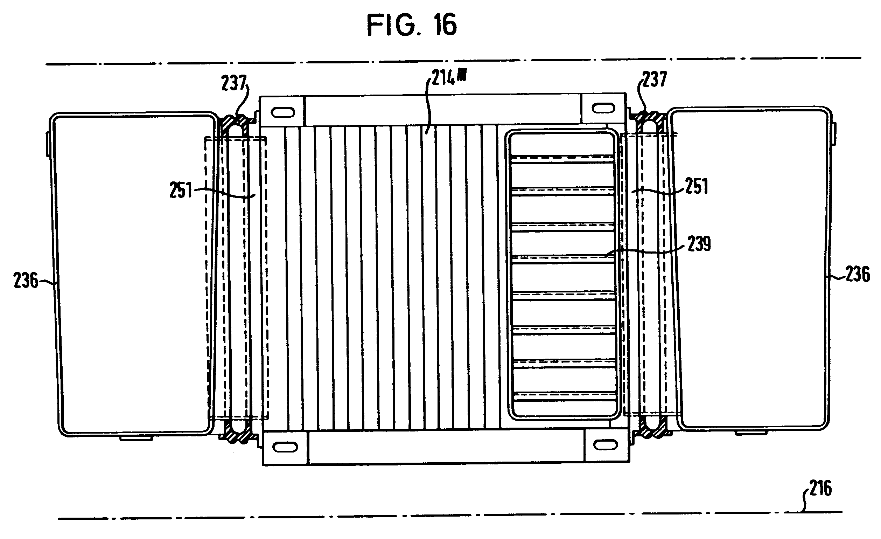

Fig. 16 zeigt einen Querschnitt durch einen einen vertikalen Verkehrsweg in Form einer Treppe 239 aufweisenden Container 214''', an den über seitliche Öffnungen 251 und elastischen Zwischenstücken 237 entsprechende seitliche Öffnungen aufweisende Längsgangkanäle 236 so angeschlossen sind, daß das Innere des Containers 214''' durch die Öffnungen und die Zwischenstücke 237 hindurch betreten werden kann. Die elastischen Zwischenstücke stellen Durchgänge bzw. Kanalstücke 237 zwischen den einzelnen Banteilen dar.

Nach Fig. 17 erstreckt sich die Treppe 239 durch horizontale Öffnungen 252, 253 im Boden bzw. in der Decke zweier übereinander liegender Container 214''' hindurch, so daß auf diese Weise ein vertikaler Verkehrsweg zwischen den beiden Etagen 203, 204 gewährleistet ist, die durch die Querfachwerkträger 217, 218 bzw. 230, 231 definiert sind.

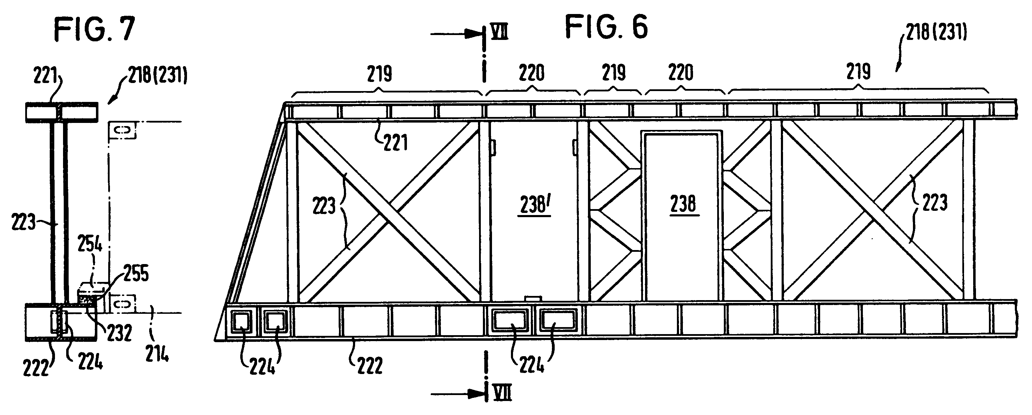

In Fig. 17 ist auch ebenso wie in den Fig. 7 und 9 angedeutet, wie die Container 214, 214', 214'', 214''' über seitliche Ausleger 254 und elastische Glieder 255 auf den Querlaufschienen 232 oder auch sonstigen Gegenlagern elastisch abgestützt werden können, nachdem sie entweder mittels der Laufrollen 233 oder auf andere Weise an Ort und Stelle gebracht worden sind.

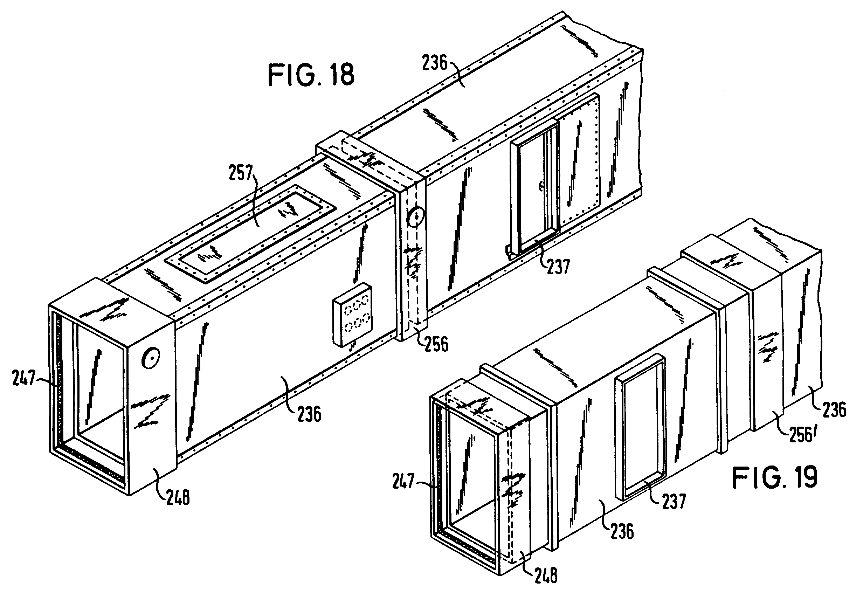

Die Fig. 18 und 19 zeigen zwei Ausführungsformen von Längsgangkanälen 236, die als Längsgang- und -versorgungselemente 215 zwischen aufeinanderfolgenden Querfachwerkträgern 217, 218, 230, 231 angeordnet und mit den Längsgangkanalanschlüssen 235 verbunden werden können.

Fig. 18 zeigt dabei einen Anschluß mittels eines Verbindungsrahmens 248, wie er in Fig. 14 im einzelnen veranschaulicht ist. Einzelne kürzere Sektionen von Längsgangkanälen 236 können durch Verbindungsrahmen 256 zu größeren Einheiten in Längsrichtung miteinander verbunden werden.

In der Decke der Längsgangkanäle 236 können z.B. herausnehmbare Montage- und Revisionsdekkel 257 angeordnet sein.

In den Seitenwänden der Längsgangkanäle 236 sind außerdem Durchgänge 237 zu Containern vorgesehen.

Nach Fig. 19 sind zwei Sektionen eines Längsgangkanales 236 durch einen starren und integralen Rahmen 256' zu einer größeren Baueinheit miteinander verbunden.

Erfindungsgemäß sind die Querfachwerkträger 217, 218 so bemessen, daß sechs Einheitscontainer nebeneinander eingehängt werden können und auch noch Raum für zwei Längsgangkanäle 236 mit einer Gangbreite von 1,2 m verbleibt. Aufgrund dieser Modulrasterung ergibt sich eine einfache Struktur, welche sowohl in der Länge, der Breite als auch in der Höhe eine Fülle von Variationsmöglichkeiten bietet.

Von besonderer Bedeutung ist auch, daß jeder Querfachwerkträger 217, 218, 230, 231 die Höhe einer Etage 203, 204 innerhalb des Schiffsaufbaus besitzt, wodurch die Möglichkeit des Aufbaus einer zweiten Etage einfach dadurch gegeben ist, daß zwei Querfachwerkträger übereinander angeordnet werden. Gegebenenfalls könnte auch eine dritte oder vierte Etage entsprechend vorgesehen werden.

Die wettergeschützte Verkleidung des Gerippes mittels der Paneele 228 und der Querdecks 209, 216 erfolgt bevorzugt unter Zuhilfenahme von leichten Hilfsträgern, die an den Verbindungsholmen angebracht werden. Die Paneele 228 sind liegend, d.h. in Schiffslängsrichtung angebracht. Ferner soll die Paneellänge der Entfernung der Mitten der Querfachwerkträger, die aufeinander folgen, entsprechen. Die Paneelbreite wird vorgegeben durch die Etagenhöhe, wobei gegebenenfalls eine geplante Seitenneigung der Außenwände zu berücksichtigen ist.

Das Innere des erfindungsgemäßen Wasserfahrzeuges ist also komplett modular aufgebaut. Lediglich in den Seitenrümpfen bzw. Schwimmern 211 verbleiben einige kleine Systeme, welche lokal montiert werden; ebenso werden die Verbindungsleitungen für Fluide, Gase und Elektrik wie üblich montiert.

Das Einsetzen der Container 214 erfolgt bevorzugt von der Seite her entlang der Querlaufschiene 232, wobei die Container 214 zunächst auf den Laufrollen 233 verfahren und dann an Ort und Stelle abgesenkt und über elastische Zwischenglieder 240', 255 fest mit den Querfachwerkträgern 217, 218, 230, 231 verbunden werden. Die Container 214 sind auf diese Weise elastisch aufgehängt. Benötigt man größere Räume, so können auch zwei Container 214 zu einer Einheit 214' fest miteinander verbunden werden, wobei man die aneinandergrenzenden Seitenwände der beiden Container 214 fortlassen kann.

Bei konsequenter Durchführung des erfindungsgemäßen Systems ist der gesamte von Menschen benutzte Innenraum sowie der von empfindlichen technischen Geräten eingenommene Raum schock- und vibrationsgeschützt. Im Falle einer Un

terwasserexplosion ergibt diese Montageart in Zusammenwirkung mit dem ebenfalls dämpfenden Luftkissen einen hochwertigen Eigenschutz für das Wasserfahrzeug.

Nach Fig. 2 ist zwischen den beiden vorderen seitlichen Containern 214 ein Platz 258 freigelassen, in dem z.B. eine Deckswaffe angebracht werden kann, wozu eine entsprechende Plattform vorgesehen wird.

Die Querfachwerkträger 217, 218,230, 231 sind vorzugsweise als Stahlschweißkonstruktion ausgeführt, können aber insbesondere bei leichten Fahrzeugen auch aus glasfaserverstärktem Kunststoff bestehen.

**Patentansprüche**

1. Katamaran-Wasserfahrzeug mit zwei sich in Fahrtrichtung erstreckenden, parallel zueinander mit Abstand angeordneten Schwimmern, welche oben durch eine Einbauten tragende, unten durch ein Querdeck abgedichtete Verbindungsstruktur miteinander verbunden sind, dadurch **gekennzeichnet,** daß die Verbindungsstruktur mindestens zwei im Abstand hintereinander angeordnete Doppel-Querfachwerkträger (217) umfaßt, welche zumindest teilweise Querganghohlräume (212) und Leitungsaufnahmehohlräume (213, 213') enthalten und an deren Front- und/oder Achterseiten Container (214, 214', 214'', 214''') und in Verbindung mit den Querganghohlräumen (212) bzw. Leitungsaufnahmehohlräumen (213, 213') horizontale Verkehrswege darstellende Längsgang- und -versorgungselemente (215) in modularer Bauweise angebracht sind.

2. Wasserfahrzeug nach Anspruch 1, dadurch **gekennzeichnet,** daß die Verbindungsstruktur zwischen zumindest einigen der Doppel-Querfachwerkträger (217) angeordnete Einfach-Querfachwerkträger (218) umfaßt.

3. Wasserfahrzeug nach Anspruch 1 und 2, dadurch **gekennzeichnet,** daß in Längsrichtung abwechselnd ein Doppel-Querfachwerkträger (217) und ein Einfach-Querfachwerkträger (218) zwischen den Schwimmern (211) angebracht ist.

4. Wasserfahrzeug nach einem der vorhergehenden Ansprüche, dadurch **gekennzeichnet,** daß die Längsabstände (A) zwischen aufeinanderfolgenden Querfachwerkträgern (217, 218) gleich sind.

5. Wasserfahrzeug nach einem der vorhergehenden Ansprüche, dadurch **gekennzeichnet,** daß die Container (214, 214', 214'', 214''') und die Längsgang- und -versorgungselemente (215) an der Front- und Achterseite an je einem Querfachwerkträger (217, 218) angebracht sind.

6. Wasserfahrzeug nach einem der vorhergehenden Ansprüche, dadurch **gekennzeichnet,** daß die Container (214, 214', 214'', 214''') und die Längsgang- und -versorgungselemente (215) von zumindest einer Seite her in Querrichtung an ihren Ort zwischen zwei Querfachwerkträgern (217, 218) einbringbar sind.

7. Wasserfahrzeug nach einem der vorhergehenden Ansprüche, dadurch **gekennzeichnet,** daß jeder Querfachwerkträger (217, 218) einen Obergurt (221), einen Untergurt (222) und dazwischen angeordnete Verstrebungen (223) aufweist.

8. Wasserfahrzeug nach einem der vorhergehenden Ansprüche, dadurch **gekennzeichnet,** daß jeder Querfachwerkträger (217, 218) Verstrebungsabschnitte (219) und Längsdurchgangsabschnitte (220) aufweist.

9. Wasserfahrzeug nach Anspruch 7 oder 8, dadurch **gekennzeichnet,** daß in dem Ober- und/oder Untergurt (221, 222) Leitungsdurchführungskanäle (224) vorgesehen sind.

10. Wasserfahrzeug nach einem der vorhergehenden Ansprüche, dadurch **gekennzeichnet,** daß die Doppel-Querfachwerkträger (217) aus zwei einen Abstand in Schiffslängsrichtung aufweisenden Einfach-Querfachwerkträgern zusammengesetzt sind.

11. Wasserfahrzeug nach Anspruch 10, dadurch **gekennzeichnet,** daß zwischen den Einfach-Querfachwerkträgern oben und unten in Querabständen Längsverbinder (225) vorgesehen sind.

12. Wasserfahrzeug nach einem der vorhergehenden Ansprüche, dadurch **gekennzeichnet,** daß aufeinanderfolgende Querfachwerkträger (217, 218) durch Längsträger (226) fest verbunden sind.

13. Wasserfahrzeug nach Anspruch 12, dadurch **gekennzeichnet,** daß jeweils nur oben und unten Längsträger (226) angeordnet sind, derart, daß von der Seite her die Container (214) und Längsgang- und -versorgungselemente (215) dazwischen einbringbar sind.

14. Wasserfahrzeug nach Anspruch 12 oder 13, dadurch **gekennzeichnet,** daß zwischen den seitlichen oberen und unteren Längsträgern (226) herausnehmbare Vertikalstützen (227) angeordnet sind.

15. Wasserfahrzeug nach einem der vorangehenden Ansprüche, dadurch **gekennzeichnet,** daß in der Verbindungsstruktur ein nur der Abdichtung dienendes, unterstes Querdeck (216) vorgesehen ist und ansonsten nur an vorgebbaren Stellen zwischen den Containern (214) und den Längsgang- und -versorgungselementen (215) Zwischenböden angeordnet sind.

16. Wasserfahrzeug nach einem der vorangehenden Ansprüche, dadurch **gekennzeichnet,** daß in der Verbindungsstruktur nur an vorgebbaren Stellen zwischen den Containern (214) und den Längsgang- und -versorgungselementen (215) Zwischenwände angeordnet sind.

17. Wasserfahrzeug nach einem der vorhergehenden Ansprüche, dadurch **gekennzeichnet,** daß die Verbindungsstruktur seitlich, vorn und achtern durch Paneele (228) wasserdicht abgedichtet ist.

18. Wasserfahrzeug nach Anspruch 17, dadurch **gekennzeichnet,** daß die seitlichen Paneele (228) so unterteilt sind, daß sie zum seitlichen Einbringen oder Herausnehmen der Container (214) und der Längsgang- und -versorgungselemente (215) sektionsweise abnehmbar sind.

19. Wasserfahrzeug nach einem der vorhergehenden Ansprüche, dadurch **gekennzeichnet,** daß die Schwimmer (211) im oberen Bereich einen nach innen gerichteten Vorsprung (229) aufweisen, an dem sich oben die Querfachwerkträger (217, 218) und das unterste Querdeck (216) abstützen.

20. Wasserfahrzeug nach Anspruch 19, dadurch **gekennzeichnet,** daß der Vorsprung (229) maximal etwa genauso breit wie oder etwas weniger breit als die breiteste Stelle des darunter liegenden Teils des Schwimmers (211) ist.

21. Wasserfahrzeug nach Anspruch 19 oder 20, dadurch **gekennzeichnet,** daß seitlich zumindestens ein Verstrebungsabschnitt (219) und ein Längsdurchgangsabschnitt (220) vertikal oberhalb des zugeordneten Schwimmers (211) vorgesehen sind.

22. Wasserfahrzeug nach einem der vorhergehenden Ansprüche, dadurch **gekennzeichnet,** daß 40 bis 55 %, insbesondere 45 bis 50 % der Länge jedes Querfachwerkträgers (217, 218) im Bereich oberhalb des Zwischenraumes zwischen den Schwimmern (211), der Rest vertikal oberhalb der Schwimmer (211) angeordnet ist.

23. Wasserfahrzeug nach einem der vorhergehenden Ansprüche, dadurch **gekennzeichnet,** daß auf den Querfachwerkträgern (217, 218) gleichartig ausgebildete, jedoch kürzere Ober-Doppel- bzw. -Einfach-Querfachwerkträger (230, 231) angebracht sind.

24. Wasserfahrzeug nach Anspruch 23, dadurch **gekennzeichnet,** daß die kürzeren Ober-Doppel- und -Einfach-Querfachwerkträger (230, 231) noch so lang sind, daß sie bis in den Bereich vertikal oberhalb der Schwimmer (211) reichen.

25. Wasserfahrzeug nach einem der vorhergehenden Ansprüche, dadurch **gekennzeichnet,** daß an der Front- und/oder Achterseite der Querfachwerkträger (217, 218, 230, 231) Querlaufschienen (232) zum Ein- bzw. Ausfahren und gegebenenfalls Befestigen der Container (214) und/oder der Längsgang- und -versorgungselemente (215) vorgesehen sind.

26. Wasserfahrzeug nach Anspruch 25, dadurch **gekennzeichnet,** daß die Container (214) und/oder die Längsgang- und -versorgungselemente (215) mit heb- und senkbaren Laufrollen (233) für die zugeordnete Querlaufschiene (232) versehen sind.

27. Wasserfahrzeug nach einem der vorhergehenden Ansprüche, dadurch **gekennzeichnet,** daß die Doppel-Querfachwerkträger (217, 230) Quergangkanäle (234) enthalten, die vorzugsweise rundum geschlossen sind.

28. Wasserfahrzeug nach Anspruch 27, dadurch **gekennzeichnet,** daß im Bereich der Längsdurchgangsabschnitte (220) Längsgangkanalanschlüsse (235) an den Quergangkanälen (234) angeordnet sind.

29. Wasserfahrzeug nach Anspruch 28, dadurch **gekennzeichnet,** daß an die Längsgangkanalanschlüsse (235) Längsgangkanäle (236) angeschlossen sind.

**30.** Wasserfahrzeug nach einem der Ansprüche 27 bis 29, dadurch **gekennzeichnet,** daß von den Quergangkanälen (234) und/oder den Längsgangkanälen (236) Durchgänge (237) zu angrenzenden Container (214) abzweigen.

**31.** Wasserfahrzeug nach Anspruch 30, dadurch **gekennzeichnet,** daß die Container-Durchgänge als Kanalstücke (237) ausgebildet sind, die vorzugsweise einen elastischen Übergang darstellen.

**32.** Wasserfahrzeug nach einem der vorhergehenden Ansprüche, dadurch **gekennzeichnet,** daß vertikale Verkehrswege (239) zwischen übereinander angeordneten Containern (114''') vorgesehen sind.

**33.** Wasserfahrzeug nach einem der vorhergehenden Ansprüche, dadurch **gekennzeichnet,** daß die Container (214), die Quergangkanäle (234) und die Längsgangkanäle (236) elastisch an den Querfachwerkträgern (217, 218, 230, 231) aufgehängt sind.

**34.** Wasserfahrzeug nach einem der vorhergehenden Ansprüche, dadurch **gekennzeichnet,** daß die Container (214) und die Längsgang- und -versorgungselemente (215) in Schiffslängsrichtung ein dem Abstand (A) der Querfachwerkträger (217, 218, 230, 231) entsprechendes Einheitsmaß aufweisen.

**35.** Wasserfahrzeug nach einem der vorhergehenden Ansprüche, dadurch **gekennzeichnet,** daß die Container (214) in seitlicher Richtung ein Einheitsmaß oder ein ganzzahliges Vielfaches dieses Einheitsmaßes aufweisen.

**36.** Wasserfahrzeug nach Asnpruch 35, dadurch **gekennzeichnet,** daß Container (214, 214', 214'') mit dem einfachen, zweifachen und dreifachen Einheitsmaß vorgesehen sind.

**37.** Wasserfahrzeug nach einem der vorhergehenden Ansprüche, dadurch **gekennzeichnet,** daß ein oder mehrere Container fortgelassen sind und an deren Stelle eine Plattform vorgesehen ist, auf bzw. an der eine Funktionseinheitsanlage wie eine Waffe, ein Ortungsgerät o.dgl. angeordnet ist.

**38.** Wasserfahrzeug nach einem der vorhergehenden Ansprüche, dadurch **gekennzeichnet,** daß das durch die Querfachwerkträger (217, 218, 230, 231) und die Längsträger (226) gebildete Grundgerippe oben nur dort durch ein Querdeck (209) wasserdicht und begehbar verkleidet ist, wo keine obere Etage (204) oder kein Brückenmodul (241) anschließt.

## Claims

**1.** Catamaran-type marine craft comprising two floats arranged spaced apart and parallel to one another which extend in the direction of travel and which are connected together at the top by a connection structure which carries built-in structures and which is sealed at the bottom by a transverse deck, characterised in that the connection structure includes at least two double transverse trussed girders (217) arranged spaced apart behind one another which contain, at least in part, transverse hollow cavities (212) for passageways and line accommodating hollow cavities (213, 213'), with containers (214, 214', 214'', 214''') and longitudinal passage and supply elements (215), which represent horizontal walking-through passsages in connection with the transverse hollow cavities (212) for passageways or the line accommodating hollow cavities (213, 213'), being mounted in a modular construction at the front and/or rear sides of the double transversed trussed girders.

**2.** A marine craft in accordance with claim 1, characterised in that the connection structure includes single transverse trussed girders (218) arranged between at least some of the double transverse trussed girders (217).

**3.** A marine craft in accordance with claim 1 and claim 2, characterised in that a double transverse trussed girder (217) and a single transverse trussed girder (218) are alternately mounted in the longitudinal direction between the floats (211).

**4.** A marine craft in accordance with one of the preceding claims, characterised in that the longitudinal spacings (A) between sequential transverse trussed girders (217, 218) are identical.

**5.** A marine craft in accordance with one of the preceding claims, characterised in that the containers (214, 214', 214'', 214''') and the longitudinal passage and supply elements (215) are mounted at the front and rear sides in each case to a transverse trussed girder (217, 218).

**6.** A marine craft in accordance with one of the preceding claims, characterised in that the containers (214, 214', 214'', 214''') and the longitudinal passage and supply elements (215) can be introduced from at least one side in the transverse direction into their position between two transverse trussed girders (217, 218).

7. A marine craft in accordance with one of the preceding claims, characterised in that each transverse trussed girder (217, 218) has a top chord (221), a bottom chord (222) and trusses (223) arranged therebetween.

8. A marine craft in accordance with one of the preceding claims, characterised in that each transverse trussed girder (217, 218) has trussed sections (219) and longitudinal passage sections (220).

9. A marine craft in accordance with claim 7 or claim 8, characterised in that line conveying passages (224) are provided in the top chord and/or in the bottom chord (221, 222).

10. A marine craft in accordance with one of the preceding claims, characterised in that the double transverse trussed girders (217) are put together from two single transverse trussed girders which are spaced apart in the longitudinal direction of the ship.

11. A marine craft in accordance with claim 10, characterised in that longitudinal connectors (225) are provided at the top and the bottom between the single transverse trussed girders at transverse intervals.

12. A marine craft in accordance with one of the preceding claims, characterised in that sequential transverse trussed girders (217, 218) are connected rigidly together by longitudinal girders (226).

13. A marine craft in accordance with claim 12, characterised in that in each case longitudinal beams (226) are only arranged at the top and the bottom in such a way that the containers (214) and the longitudinal passage and supply elements (215) can be introduced between them from the side.

14. A marine craft in accordance with claim 12 or claim 13, characterised in that removable vertical supports (227) are arranged between the upper and lower longitudinal beams (226) at the sides.

15. A marine craft in accordance with one of the preceding claims, characterised in that there is provided in the connection structure a lowermost transverse deck (216), which only serves for sealing, and otherwise intermediate floors arranged only at predeterminable positions between the containers (214) and the longitudinal passage and supply elements (215).

16. A marine craft in accordance with one of the preceding claims, characterised in that intermediate walls are provided in the connection structure only at predeterminable positions between the containers (214) and the longitudinal passage and supply elements (215).

17. A marine craft in accordance with one of the preceding claims, characterised in that the connection structure is sealed off in water-tight manner at the sides, at the stem, and at the stern by panels (228).

18. A marine craft in accordance with claim 17, characterised in that the side panels (228) are so subdivided that they can be removed in sections for the lateral introduction or removal of containers (214) and the longitudinal passage and supply elements (215).

19. A marine craft in accordance with one of the preceding claims, characterised in that the floats (211) have an inwardly directed projection (229) in the upper region against which the transverse trussed girders (217, 218) and the lowermost transverse deck (216) are braced at the top.

20. A marine craft in accordance with claim 19, characterised in that the projection (229) is, at the maximum, approximately as wide as or slightly less wide than the broadest part of the float (211) lying beneath it.

21. A marine craft in accordance with claim 19 or claim 20, characterised in that at least one trussed section (219) and one longitudinal passage section (220) are provided at the side vertically above the associated float (211).

22. A marine craft in accordance with one of the preceding claims, characterised in that 40 to 45%, in particular 45 to 50% of the length of each transverse trussed girder (217, 218) is arranged in the region above the intermediate space between the floats (211), with the rest being arranged vertically above the floats (211).

23. A marine craft in accordance with one of the preceding claims, characterised in that upper double and single transverse trussed girders (230, 231) are mounted on the transverse trussed girders (217, 218) and are of similar construction but shorter.

24. A marine craft in accordance with claim 23, characterised in that the shorter, upper, double and single transverse trussed girders (230, 231) are still sufficiently long that they extend into the region vertically above the floats (211).

25. A marine craft in accordance with one of the preceding claims, characterised in that transverse running rails (232) for the running in and running out, and optionally for the securing of the containers (214), and/or of the longitudinal passage and supply elements (215), are provided at the front and/or rear sides of the transverse trussed girders (217, 218, 230, 231).

26. A marine craft in accordance with claim 25, characterised in that the containers (214), and/or the longitudinal passage and supply elements (215), are provided with liftable and lowerable running rollers (233) for the associated transverse running rails (232).

27. A marine craft in accordance with one of the preceding claims, characterised in that the double transverse trussed girders (217, 230) contain transverse passageways (234) which are preferably closed on all sides.

28. A marine craft in accordance with claim 27, characterised in that longitudinal passageway connections (235) are arranged on the transverse passageways (234) in the region of the longitudinal passage sections (220).

29. A marine craft in accordance with claim 28, characterised in that longitudinal passageways (236) are connected to the longitudinal passage connections (235).

30. A marine craft in accordance with one of the claims 27 to 29, characterised in that openings (237) to the adjoining containers (214) branch off from the transverse passageways (234) and/or from the longitudinal passageways (236).

31. A marine craft in accordance with claim 30, characterised in that the container openings are constructed as passage sections (237) which preferably represent a resilient transition.

32. A marine craft in accordance with one of the preceding claims, characterised in that vertical communication paths (239) are provided between containers (114''') which are arranged above one another.

33. A marine craft in accordance with one of the preceding claims, characterised in that the containers (214), the transverse passageways (234) and the longitudinal passageways (236) are resiliently suspended on the transverse trussed girders (217, 218, 230, 231).

34. A marine craft in accordance with one of the preceding claims, characterised in that the containers (214) and the longitudinal passage and supply elements (215) have a unit dimension in the longitudinal direction of the ship which corresponds to the spacing (A) of the transverse trussed girders (217, 218, 230, 231).

35. A marine craft in accordance with one of the preceding claims, characterised in that the containers (214) have a unit dimension or an integral multiple of this unit dimension in the lateral direction.

36. A marine craft in accordance with claim 35, characterised in that the containers (214, 214', 214'', 214''') are provided with one, two and three times the unit dimension.

37. A marine craft in accordance with one of the preceding claims, characterised in that one or more containers are omitted and in that a platform is provided in their place on which, or at which, a standardised operating system such as a weapon, a position finding apparatus or the like is arranged.

38. A marine craft in accordance with one of the preceding claims, characterised in that the basic skeleton formed by the transverse trussed girders (217, 218, 230, 231) and the longitudinal beams (226) is clad at the top by a transverse deck (209) in a water-tight manner so that it can be walked on but only where there is no adjoining upper storey (204) or bridge module (241).

**Revendications**

1. Véhicule marin de type catamaran comprenant deux flotteurs qui s'étendent à distance parallèlement l'un à l'autre dans la direction de déplacement et sont reliés l'un à l'autre au moyen d'une structure de liaison qui porte en haut des structures intégrées et qui est étanchée en bas par un pont transversal, caractérisé en ce que la structure de liaison comprend au moins au moins deux poutres doubles transversales en treillis (217) agencées à distance l'une derrière l'autre, lesquelles contiennent au moins en partie des espaces creux de passage transversal (212) et des espaces creux de réception de conduits (213, 213'), et en ce que des conteneurs (214, 214', 214'', 214''') et des éléments de passage longitudinal et d'alimentation (215) représentant des trajets de passage longitudinaux en relation avec les espaces creux de passage transversal (212) et les espaces creux de réception de conduits (213, 213') sont rapportés de manière modulaire sur les côtés avant et arrière desdites poutres.

2. Véhicule marin selon la revendication 1, caractérisé en ce que la structure de liaison comprend des poutres simples transversales en treillis (218) agencées entre au moins quelques unes des poutres doubles transversales en treillis (217).

3. Véhicule marin selon l'une des revendications 1 ou 2, caractérisé en ce qu'une poutre double transversale en treillis (217) est montée en alternance avec une poutre simple transversale en treillis (218) agencées entre les flotteurs (211) dans la direction longitudinale.

4. Véhicule marin selon l'une quelconque des revendications précédentes, caractérisé en ce que les distances (A) dans le sens longitudinal entre poutres transversales en treillis (217, 218) successives sont égales.

5. Véhicule marin selon l'une quelconque des revendications précédentes, caractérisé en ce que les conteneurs (214, 214', 214'', 214''') et les éléments de passage longitudinal et d'alimentation (215) sont montés sur les côtés avant et arrière sur l'une des poutres transversales en treillis (217, 218).

6. Véhicule marin selon l'une quelconque des revendications précédentes, caractérisé en ce que les conteneurs (214, 214', 214'', 214''') et les éléments de passage longitudinal et d'alimentation (215) peuvent être introduits à leur place entre deux poutres transversales en treillis (217, 218) en direction transversale depuis l'un des côtés au moins.

7. Véhicule marin selon l'une quelconque des revendications précédentes, caractérisé en ce que chaque poutre transversale en treillis (217, 218) comprend une ceinture supérieure (221), une ceinture inférieure (222) et des entretoises (223) disposées entre celles-ci.

8. Véhicule marin selon l'une quelconque des revendications précédentes, caractérisé en ce que chaque poutre transversale en treillis (217, 218) comprend des tronçons d'entretoise (219) et des tronçons de passage longitudinal (220).

9. Véhicule marin selon l'une des revendications 7 ou 8, caractérisé en ce que des canaux (224) de passage de conduits sont prévus dans la ceinture supérieure et/ou inférieure (221, 222).

10. Véhicule marin selon l'une quelconque des revendications précédentes, caractérisé en ce que les poutres doubles transversales en treillis (217) sont composées de deux poutres simples transversales en treillis disposées à distance dans le sens longitudinal du bateau.

11. Véhicule marin selon la revendication 10, caractérisé en ce que des éléments longitudinaux de liaison (225) sont prévus entre les poutres simples transversales en treillis, en haut et en bas et avec des écartements transversaux.

12. Véhicule marin selon l'une quelconque des revendications précédentes, caractérisé en ce que des poutres transversales en treillis (217, 218) successives sont reliées mutuellement rigidement par des poutres longitudinales (226).

13. Véhicule marin selon l'une quelconque des revendications précédentes, caractérisé en ce qu'il est prévu des poutres longitudinales (226) seulement en haut et en bas respectivement, de telle manière que les conteneurs (214) et les éléments de passage longitudinal et d'alimentation (215) peuvent être introduits entre celles-ci en direction transversale depuis l'un des côtés.

14. Véhicule marin selon l'une des revendications 12 ou 13, caractérisé en ce que des étais verticaux démontables (227) sont prévus entre les poutres longitudinales (226) latérales supérieures et inférieures.

15. Véhicule marin selon l'une quelconque des revendications précédentes, caractérisé en ce qu'il est prévu dans la structure de liaison un pont transversal inférieur (216) qui ne sert qu'à l'étanchement, et outre celui-ci, des planchers intermédiaires uniquement en des endroits prédéterminés entre les conteneurs (214) et les éléments de passage longitudinal et d'alimentation (215).

16. Véhicule marin selon l'une quelconque des revendications précédentes, caractérisé en ce qu'il est prévu dans la structure de liaison des parois intermédiaires seulement à des endroits prédéterminés entre les conteneurs (214) et les éléments de passage longitudinal et d'alimentation (215).

17. Véhicule marin selon l'une quelconque des revendications précédentes, caractérisé en ce que la structure de liaison est rendue étanche à l'eau sur les côtés, à l'avant et à l'arrière au moyen de panneaux (228).

18. Véhicule marin selon la revendication 17, caractérisé en ce que les panneaux (228) latéraux sont subdivisés de telle manière qu'ils peuvent être enlevés par sections pour l'introduction latérale des conteneurs (214) et des éléments de passage longitudinal et d'alimentation (215).

**19.** Véhicule marin selon l'une quelconque des revendications précédentes, caractérisé en ce que dans la région supérieure, les flotteurs (211) comportent une saillie (229) dirigée vers l'intérieur, sur laquelle s'appuient au-dessus les poutres transversales (217, 218) et le pont transversal inférieur (216).

**20.** Véhicule marin selon la revendication 19, caractérisé en ce que la saillie (229) est au maximum environ aussi large ou légèrement moins large que la partie la plus large de la partie du flotteur (211) qui se trouve au-dessous.

**21.** Véhicule marin selon l'une des revendications 19 ou 20, caractérisé en ce qu'il est prévu sur le côté au moins un tronçon d'entretoisement (219) et un tronçon de passage longitudinal (220) verticalement au-dessus du flotteur associé.

**22.** Véhicule marin selon l'une des revendications précédentes, caractérisé en ce que 40 à 55%, en particulier 45 à 50% de la longueur de chaque poutre transversale (217, 218) est agencé dans la région au-dessus de l'intervalle entre les flotteurs (211) et le reste verticalement au-dessus des flotteurs (211).

**23.** Véhicule marin selon l'une des revendications précédentes, caractérisé en ce que des poutres supérieures transversales doubles ou simples en treillis (230, 231) de même réalisation, mais plus courtes, sont montées sur les poutres transversales (217, 218).

**24.** Véhicule marin selon la revendication 23, caractérisé en ce que les poutres supérieures transversales doubles ou simples (230, 231) plus courtes sont suffisamment longues pour s'étendre jusque dans la région située verticalement au-dessus des flotteurs (211).

**25.** Véhicule marin selon l'une des revendications précédentes, caractérisé en ce que des rails de roulement transversaux (232) sont prévus sur les côtés avant et/ou arrière des poutres transversales (217, 218, 230, 231) pour la mise en place et l'enlèvement des conteneurs (214) et des éléments de passage longitudinal et d'alimentation (215) et le cas échéant pour leur fixation.

**26.** Véhicule marin selon la revendication 25, caractérisé en ce que les conteneurs (214) et/ou les éléments de passage longitudinal et d'alimentation (215) sont munis de galets (233) relevables et abaissables pour le rail de roulement transversal (232) associé.

**27.** Véhicule marin selon l'une des revendications précédentes, caractérisé en ce que les poutres doubles transversales (217, 230) comportent des canaux de passage transversal (234) qui sont de préférence fermés sur toute leur périphérie.

**28.** Véhicule marin selon la revendication 27, caractérisé en ce qu'il est prévu dans les canaux de passage transversal (234) des baies (235) pour canaux de passage longitudinal dans la région des tronçons de passage longitudinal.

**29.** Véhicule marin selon la revendication 28, caractérisé en ce que des canaux de passage longitudinal (236) sont raccordées aux baies (235) pour canaux de passage longitudinal.

**30.** Véhicule marin selon l'une des revendication 27 à 29, caractérisé en ce que des passages (237) vers les conteneurs (214) adjacents sont prévus en dérivation depuis les canaux de passage transversal (234) et/ou depuis les canaux de passage longitudinal (236).

**31.** Véhicule marin selon la revendication 30, caractérisé en ce que les passages (237) vers les conteneurs sont réalisés sous la forme de tronçons de canaux (237) qui représentent de préférence une transition élastique.

**32.** Véhicule marin selon l'une des revendications précédentes, caractérisé en ce que des voies de passage verticales (239) sont prévues entre des conteneurs (214''') situés les uns au-dessus des autres.

**33.** Véhicule marin selon l'une des revendications précédentes, caractérisé en ce que les conteneurs (214), les canaux de passage transversal (234) et les canaux de passage longitudinal (236) sont suspendus élastiquement aux poutres transversales (217, 218, 230, 231).

**34.** Véhicule marin selon l'une des revendications précédentes, caractérisé en ce que les conteneurs (214) présentent en direction latérale une dimension unitaire ou un multiple entier de cette dimension unitaire.

**36.** Véhicule marin selon la revendication 35, caractérisé en ce qu'il est prévu des conteneurs (214, 214', 214'') ayant une fois, deux fois et trois fois la dimension unitaire.

**37.** Véhicule marin selon l'une des revendications précédentes, caractérisé en ce qu'un ou plusieurs conteneurs sont omis et en ce qu'il est prévu à leur place une plateforme sur laquelle est agencée une installation unitaire fonctionnelle telle qu'une arme, un appareil de localisation, ou similaire.

**38.** Véhicule marin selon l'une des revendications précédentes, caractérisé en ce que l'ossature de base formée par les poutres transversales (217, 218, 230, 231) et les poutres longitudinales (226) est revêtue en haut d'un habillage étanche à l'eau et supportant le piétinement uniquement aux endroits où ne se raccorde aucun étage supérieur (204) ou aucun module de

pont (241).

FIG. 1

FIG. 2

FIG. 3

EP 0 202 584 B1

FIG. 4

FIG. 5

FIG. 7

FIG. 6

EP 0 202 584 B1

FIG. 9

FIG. 8

FIG. 10

FIG. 11

FIG. 12

EP 0 202 584 B1

# FIG. 13

## FIG. 14

## FIG. 15

FIG. 16

# FIG. 17

EP 0 202 584 B1

FIG. 18

FIG. 19